# EUROPEAN PATENT SPECIFICATION

(11) **EP 0 531 635 B1**
(45) Date of publication and mention of the grant of the patent: **11.09.1996**
(21) Application number: 92110502.9
(22) Date of filing: 22.06.1992
(51) Int. Cl.: G06F 3/033

(54) **Computer system having resume function and permitting pointing device to be connected thereto**
Rechnersystem mit Wiederaufnahmefunktion und verbindbarer Hinweisanordnung
Système ordinateur avec fonction de reprise et dispositif de pointage connectable

(30) Priority: 09.09.1991 JP 229112/91
(43) Date of publication of application: 17.03.1993
(73) Proprietor: KABUSHIKI KAISHA TOSHIBA, Kawasaki-shi, Kanagawa-ken 210 (JP)
(72) Inventor: Mason, James, c/o Intellectual Property Division, Minato-ku, Tokyo 105 (JP)
(74) Representative: Henkel, Feiler, Hänzel & Partner

(56) References cited:
- EP-A- 0 430 219
- IBM TECHNICAL DISCLOSURE BULLETIN, vol. 32, no. 8B, January 1990, New York, US, pp. 449-450, XP82092; 'Enhanced mouse mode for the keyboard/mouse controller'

## Description

This invention relates to a computer system which has a resume function and to which a pointing device such as a mouse having a controller therein can be connected.

Conventionally, a mouse for inputting a coordinate position on the display plane of a display device by use of a mouse cursor is used in a personal computer, for example. The mouse is a pointing device for detecting the movement of the mouse cursor in the x and y directions on the display plane of the display device and inputting coordinate data on the two-dimensional plane.

As the above mouse, there is provided a new type of mouse having a controller for controlling the operation of the mouse itself according to various status data stored in the register of the mouse, for example, a PS/2 type mouse manufactured by IBM. Various status data includes data related to setting of the initialization, setting of scaling, setting of sampling rate, setting of resolution and permission/inhibition of mouse interruption process, for example.

As the computer system, there is provided a system having a resume function which includes a suspend process and resume process. The suspend process is a process for preventing various data used in each component/device from being erased and storing the various data when the system power source is turned off, and the resume process is a process for returning the various data stored in the suspend process to each component/device when the system power source is turned on again. European Patent Application EP 430 219 discloses a computer unit having a resume function including a resume process which determines whether an expansion unit is connected to the computer unit. If no expansion unit is connected, the resume process is executed, otherwise a warning message is output.

In a case where the above new type mouse is connected to the computer system having the resume function, voltage supply to the mouse and each component of the computer system is interrupted when the system power source is turned off. After this, when the system power source is turned on again, various data is returned to each component by the resume function in the computer system. However, in the mouse, various status data is not returned to the register in the mouse. That is, since various status data stored in the register of the mouse is erased when the system power source is turned off, various status data which has been stored in the register of the mouse immediately before the system power source is turned off cannot be used even after the system power source is turned on again. Therefore, in such a case, various status data must be set into the register of the mouse again.

For the above described reason, it is desired to develop a computer system which can effect the resume function for the mouse having a controller for controlling the operation of the mouse based on various status data stored in the register.

An object of this invention is to provide a computer system which can effect the resume function for the mouse having a controller for controlling the operation of the mouse based on various status data stored in the register.

According to one aspect of the present invention there is provided a computer system to which a pointing device having a register for storing status data and a controller for controlling operation of pointing device in accordance with the stored status data is connectable, the computer system comprising: a power source; memory means for storing data; a battery for backing up the memory means in which data is stored; and control means for determining whether a pointing device is connected when the power source is turned off during operation of the computer system and for writing the status data stored in the register into the memory means if a pointing device is connected.

According to another aspect of the present invention, there is provided a method for executing resume function in a computer system to which a pointing device is connectable, the computer system having a power source and a memory, the memory being backed up by a battery, the pointing device having a register for storing status data and a controller for controlling operation of the pointing device in accordance with the stored status data, the method comprising the steps of: determining whether the power source is turned off during operation of the computer system; determining whether a pointing device is connected when the power source is turned off; writing the status data stored in the register into the memory if a pointing device is connected.

This invention can be more fully understood from the following detailed description when taken in conjunction with the accompanying drawings, in which:
Fig. 1 is a block diagram showing the construction of a computer system according to an embodiment of this invention;
Fig. 2 is a flowchart showing the suspend process in the computer system according to the above embodiment of this invention; and
Fig. 3 is a flowchart showing the resume process in the computer system according to the above embodiment of this invention.

There will now be described an embodiment of this invention with reference to the accompanying drawings.

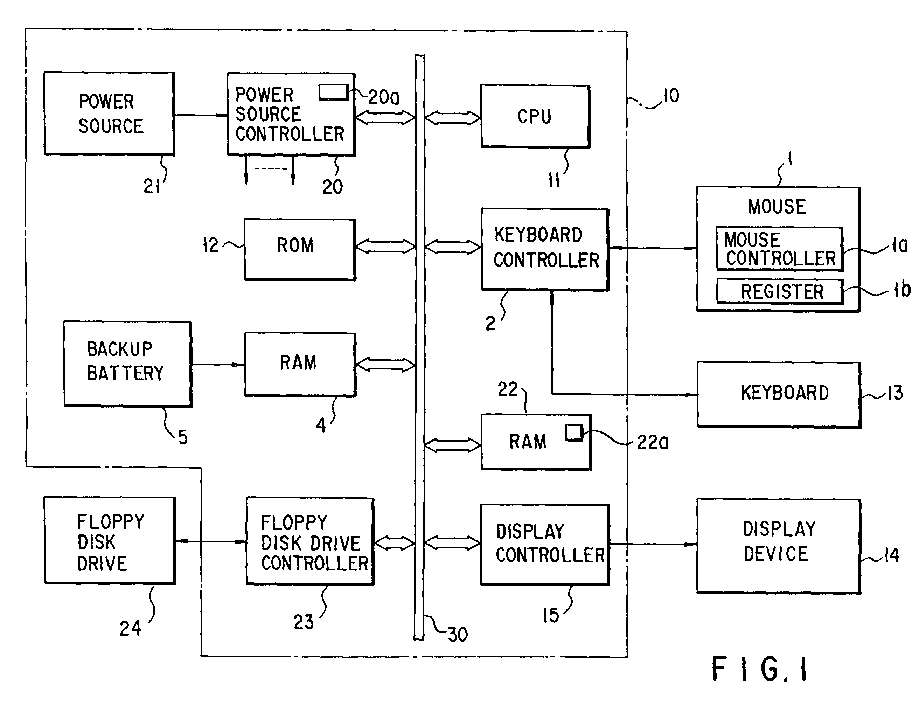

Fig. 1 is a block diagram showing the construction of a computer system according to an embodiment of this invention. As shown in Fig. 1, the computer system includes a mouse 1, computer main body 10, keyboard 13, display device 14 and floppy disk drive 24. The computer system has the resume function. The resume function includes a suspend process for storing various data used in each component/device so as to prevent the various data from being erased when the system power source is turned off and a resume process for returning the various data stored in the suspend process to each component/device when the system power source is turned on again.

The mouse 1 is used as a pointing device and includes a mouse controller 1a for controlling the operation of the mouse 1 itself and a register 1b for storing various status data necessary for the operation control. The status data stored in the register 1b includes data related to setting of initialization, setting of scaling, setting of sampling rate, setting of resolution and permission/inhibition of mouse interruption process, for example.

The computer main body 10 includes a keyboard controller 2, random access memories (RAMS) 4 and 22, backup battery 5, central processing unit (CPU) 11, read only memory (ROM) 12, display controller 15, power source controller 20, power source 21, floppy disk drive controller 23 and system bus 30.

The ROM 12 stores various programs such as a basic input and output system (BIOS). The resume function is executed by the BIOS.

The keyboard 13 is connected to the keyboard controller 2 and is operated by an operator to input key data.

The keyboard controller 2 controls the key data input of the keyboard 13. When the mouse 1 is connected to the keyboard controller 2, the keyboard controller 2 controls the mouse 1 and keyboard 13 in a time sharing manner, for example. The keyboard controller 2 outputs a resume command from the CPU 11 to the mouse controller 1a of the mouse 1 at the time of execution of the suspend process based on BIOS stored in the ROM 12 and reads out status data from the register 1b of the mouse 1. Further, the keyboard controller 2 sets status data read out from the RAM 4 by the CPU 11 into the register 1b of the mouse 1 at the time of execution of the resume process.

The power source 21 is used to supply a driving voltage to the mouse 1, keyboard 13, display device 14, each component of the computer main body 10 and floppy disk drive 24.

The power source controller 20 includes a power source switch 20a, converts the voltage from the power source 21 to a desired voltage according to the turn on/off of the power source switch 20a and supplies the converted voltage as the driving voltage to each component/device.

In order to prevent data used in each component from being erased and holding the data even when the computer system is powered off, the RAM 4 is backed up by a backup battery 5. When a power source switch 20a is turned off, the RAM 4 stores data stored in various registers of the respective components of the computer main body 10 and status data stored in the register 1b of the mouse 1 by execution of the resume function (suspend process).

The backup battery 5 is used to back up the data stored in the RAM 4 and is constructed by a rechargeable battery, for example.

The display operation of the display device 14 is controlled by the display controller 15 and it displays the mouse cursor moved by the mouse 1 on the display plane.

The floppy disk drive 24 is controlled by the floppy disk drive controller 23 and stores an operating system (OS) such as MS-DOS or WINDOWS, and various programs such as an initialization program and mouse driver (which will be described later) serving as a device driver. The initialization program is a program for checking the connection state of the peripheral devices such as the mouse 1, keyboard 13, display device 14 and floppy disk drive 24 with respect to the computer main body 10, installing the mouse driver into the OS, and initializing the respective components of the computer main body 10.

The RAM 22 is used as a main memory and has a mouse flag 22a indicating whether the mouse 1 is connected to the keyboard controller 2 or not. When the mouse 1 is connected to the keyboard controller 2, the mouse flag 22a is set. Whether the mouse 1 is connected to the keyboard controller 2 or not is checked by the CPU 11 based on the initialization program to be activated when the computer system is powered on.

The system bus 30 is used to perform data (command) transmission and reception between the keyboard controller 2, RAMs 4 and 22, CPU 11, display controller 15, power source controller 20 and floppy disk drive 24.

The CPU 11 controls the keyboard controller 2, floppy disk drive controller 23 and display controller 15 according to the BIOS stored in the ROM 12. Further, the CPU 11 executes the resume function with respect to the computer main body 10 and mouse 1 according to the BIOS stored in the ROM 12. The CPU 11 controls the operation of the mouse 1 according to the mouse driver stored in the floppy disk drive 24. The mouse driver is a program installed into the OS of MS-DOS, WINDOWS or the like to be activated when the computer system is powered on.

When the OS of the computer system is MS-DOS, a mouse driver name is previously specified on a desired file (for example, configuration file) by the operator in order to install the mouse driver into MS-DOS. As a result, the mouse driver is read out from the floppy disk drive 24 if the mouse 1 is connected to the keyboard controller 2 at the time of power-on of the computer system and then the mouse driver is installed into MS-DOS. However, if the mouse 1 is not connected to the keyboard controller 2 at the time of power-on of the computer system, the mouse driver is not installed into MS-DOS. Even if the mouse driver is not installed into MS-DOS at the time of power-on of the computer system, the mouse driver can be installed into MS-DOS by use of a set-up command while the computer system is operated on MS-DOS.

Like the case wherein MS-DOS is used as the OS, in a case where the OS of the computer system is WINDOWS, the mouse driver is read out from the floppy disk drive 24 if the mouse 1 is connected to the keyboard controller 2 at the time of power-on of the computer system and then the mouse driver is installed into WINDOWS. However, if the mouse 1 is not connected to the keyboard controller 2 at the time of power-on of the computer system, the mouse driver is not installed into WINDOWS.

Next, the operation of the computer system according to the embodiment of this invention is explained.

When the power source switch 20a of the power source controller 20 is turned on, a voltage from the power source 21 is converted into a desired voltage in the power source controller 20 and the thus converted voltage is supplied as an operation voltage to the mouse 1, respective components of the computer main body 10, keyboard 13, display device 14, and floppy disk drive 24. As a result, the OS such as MS-DOS or WINDOWS is activated. The CPU 11 checks the connection state of the peripheral device according to the initialization program, and when mouse 1 is connected to the keyboard controller 2, a mouse driver corresponding to the mouse driver name specified in the configuration file is installed into the OS.

When the mouse 1 is connected to the keyboard controller 2, the mouse 1 is initialized by the CPU 11 based on the initialization program at the time of power-on of the computer system, but in the initialization setting, the mouse 1 is set in the disabled state as will be described later. Therefore, the CPU 11 executes the mouse interruption process with respect to the mouse controller 1a of the mouse 1 by use of the mouse driver in order to operate the mouse 1. By executing the mouse interruption process, status data related to the setting of scaling, setting of sampling rate, setting of resolution and permission/inhibition of the mouse interruption process, for example, is set in the register 1b of the mouse 1 as described before.

In the initialization setting process, the mouse 1 is set in the disabled state, the sampling rate is set at 100 reports/sec, the resolution is 4 counts/mm, the scaling is set to 1:1, and status data indicating the above states is set into the register 1b, for example.

When the computer system is operated, status data indicating 10 reports/sec, 20 reports/sec, 40 reports/sec, 60 reports/sec, 80 reports/sec, 100 reports/sec, and 200 reports/sec can be set into the register 1b as the sampling rate. Further, status data indicating 1 count/mm, 2 counts/mm, 4 counts/mm, and 8 counts/mm can be set into the register 1b as the resolution. In addition, status data indicating 1:1 and 2:1 can be set into the register 1b as the scaling.

A mouse cursor is displayed on the display plane of the display 14 by executing the mouse interruption process. The mouse cursor is moved to a position corresponding to the coordinate position data (position data in the X and Y directions) in response to the movement of the mouse 1. In a case where status data indicating inhibition of the mouse interruption process is stored in the register 1b, the position of the mouse cursor displayed on the display plane of the display device 14 is not moved even when the mouse 1 is moved.

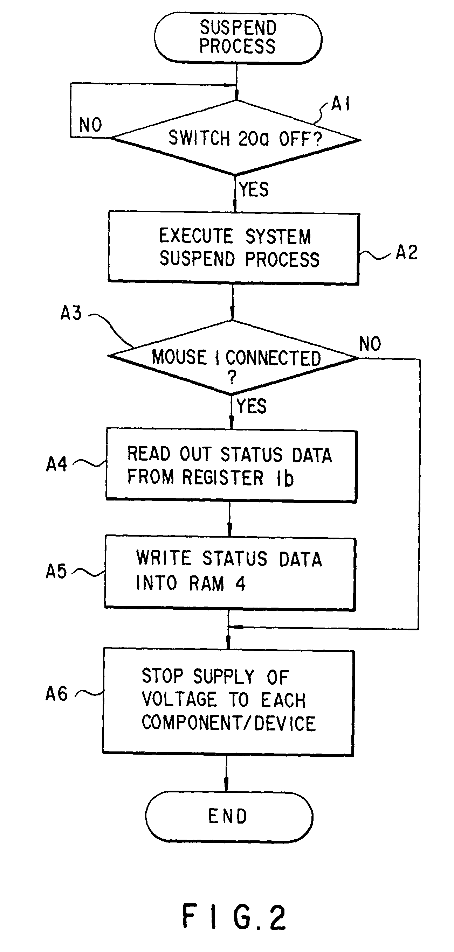

When the power source switch 20a is turned off to power off the computer system during operation of the computer system, the resume function (suspend process) is executed by the CPU 11 according to the flowchart as shown in Fig. 2.

In the step A1, it is checked whether the power source switch 20a is turned off or not. If it is detected in the step A1 that the power source switch 20a is turned off, the resume function (system suspend process) for the computer main body 10 is executed (step A2). That is, various data used in the respective components of the computer main body 10 is written into the RAM 4 according to BIOS by the CPU 11. Since the RAM 4 is backed up by the backup battery 5, data written into the RAM 4 is not erased even when the power source switch 20a is turned off and supply of the voltage to the respective components is stopped.

In the step A3, it is checked whether or not the mouse 1 is connected to the keyboard controller 2 when the power source switch 20a is turned off. The checking operation is performed by checking whether the mouse flag 22a of the RAM 22 is set or not.

If it is detected in the step A3 that the mouse 1 is not connected to the keyboard controller 2, that is, when the mouse flag 22a is not set, the process of step A6 which will be described later is executed.

On the other hand, if it is detected in the step A3 that the mouse 1 is connected to the keyboard controller 2, that is, when the mouse flag 22a is set, a resume command for executing the resume function (suspend process) is supplied from the CPU 11 to the mouse controller 1a of the mouse 1 via the keyboard controller 2.

As described before, whether or not the mouse 1 is connected to the keyboard controller 2 is checked and the mouse flag 22a is set/reset according to the checking result when the computer system is powered on, and therefore, the set/reset state of the mouse flag 22a is kept unchanged even when the mouse 1 is connected to the keyboard controller 2 while the computer system is operated.

In the step A4, status data is read out from the register 1b of the mouse 1 according to the resume command. The status data read out from the register 1b is written into the RAM 4 via the keyboard controller 2 by the CPU 11 (step A5).

When the status data is written into the RAM 4 and the mouse suspend process for the mouse 1 is completed as described above, supply of the voltage to each component/device is stopped according to the supply stop command output from the CPU 11 to the power source controller 20 (step A6). As a result, the computer system is powered off.

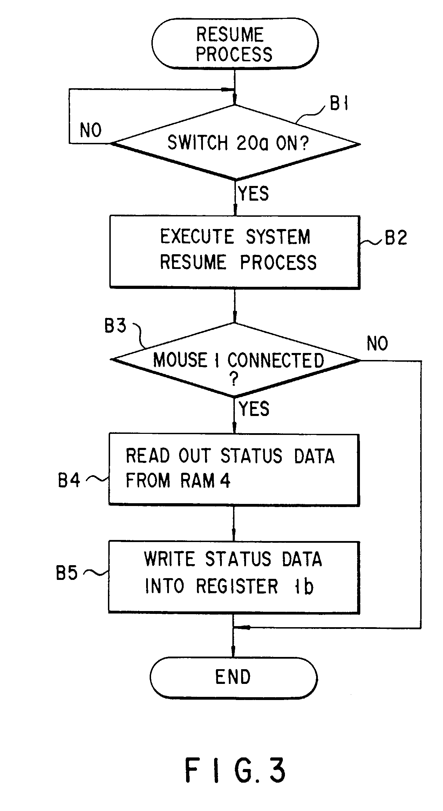

When the power source switch 20a is turned on to power on the computer system, the resume function (resume process) is executed by the CPU 11 according to the flowchart as shown in Fig. 3.

In the step B1, it is checked whether or not the power source switch 20a is turned on. If it is detected in the step B1 that the power source switch 20a is turned on, the resume function (system resume process) for the computer main body 10 is performed (step B2). That is, the CPU 11 executes the process of returning various data stored in the RAM 4 to respective components of the computer main body 10. As a result, it becomes possible for the CPU 11 to start the data processing from the operating state of the computer main body 10 immediately before the power source switch 20a is turned off.

It is checked in the step B3 whether or not the mouse 1 is connected to the keyboard controller 2 when the power source switch 20a is turned on. If it is detected in the step B3 that the mouse 1 is connected to the keyboard controller 2, the mouse resume process is performed by the CPU 11 in the same manner as the system resume process for the computer main body 10. That is, the CPU 11 reads out status data of the mouse 1 stored in the RAM 4 (step B4) and writes the status data into the register 1b of the mouse 1 via the keyboard controller 2 (step B5). As a result, various status data is returned to the mouse 1 so that the operation control can be started from the operating state of the mouse 1 immediately before the power source switch 20a is turned off.

Thus, when the mouse 1 is connected to the computer main body 10, the mouse resume function of the mouse 1 and the system resume function of the computer main body 10 are performed by the CPU 11 at the time of turn-on/off of the power source switch 20a. Therefore, various status data necessary for operation control of the mouse 1 can be stored in the RAM 4 without being erased when the power source switch 20a is turned off. After this, when the power source switch 20a is turned on, various data stored in the RAM 4 can be returned to the mouse 1 so that the operation control can be started from the operating state of the mouse 1 immediately before the power source switch 20a is turned off.

## Claims

1. A computer system to which a pointing device (1) having a register (1b) for storing status data and a controller (1a) for controlling operation of pointing device in accordance with the stored status data is connectable, the computer system comprising:
a power source (20, 21);
memory means (4) for storing data;
a battery (5) for backing up the memory means (4) in which data is stored; the computer system being characterized by further comprising :
control means (11, 12, 2) for determining whether a pointing device (1) is connected to the computer system when the power source (20, 21) is turned off during operation of the computer system and for writing the status data stored in the register (1b) into the memory means (4) if a pointing device (1) is connected.

2. The computer system according to claim 1,
characterized in that the control means (11, 12) determines whether a pointing device (1) is connected when the power source (20, 21) is turned on and sets status data stored in the memory means (4) into the register (1b) if a pointing device (1) is connected.

3. The computer system according to claim 2,
characterized in that the pointing device (1) includes a mouse (1).

4. The computer system according to claim 2,
characterized in that the computer system further comprises a display device (14), and the controller (1a) causes the display device (14) to display a cursor in accordance with the status data stored in the register (1b) and obtains a coordinate position of the displayed cursor.

5. The computer system according to claim 2, characterized in that the computer system further includes at least one component, and the control means (11, 12) writes component data used in the component into the memory means (4) when the power source (20, 21) is turned off during the operation of the computer system.

6. The computer system according to claim 5, characterized in that the control means (11, 12) sets the component data stored in the memory means (4) into the component when the power source (20, 21)is turned on.

7. A method for executing resume function in a computer system to which a pointing device (1) is connectable, the computer system having a power source (20, 21) and a memory (4), the memory (4) being backed up by a battery (5), the pointing device (1) having a register (1b) for storing status data and a controller (1a) for controlling operation of the pointing device (1) in accordance with the stored status data, the method comprising the steps of:
determining whether the power source (20, 21) is turned off during operation of the computer system;
determining whether a pointing device (1) is connected to the computer system when the power source (20, 21) is turned off;
writing the status data stored in the register (1b) into the memory (4) if a pointing device (1) is connected.

8. The method according to claim 7, characterized in that the method further comprises the steps of:
determining whether a pointing device (1) is connected when the power source (20, 21) is turned on; and
setting the status data stored in the memory (4) into the register (1b) if a pointing device (1) is connected.

9. The method according to claim 8, wherein the computer system further comprises a display device (14), the method characterized in that it further comprises the steps of;
displaying a cursor on the display device (14); and
obtaining a coordinate position of the displayed cursor.

10. The method according to claim 8, wherein the computer system further includes at least one component, the method characterized in that it further comprises the step of writing component data used in the component into the memory (4) when the power source (20, 21) is turned off.

11. The method according to claim 10, characterized in that the method further comprises the step of setting the component data stored in the memory (4) into a corresponding component when the power source (20, 21) is turned on.

## Patentansprüche

1. Rechnersystem, mit dem eine Hinweisvorrichtung (1) verbindbar ist, die ein Register (1b) zum Speichern von Statusdaten und einen Controller (1a) zum Steuern eines Betriebes der Hinweisvorrichtung gemäß den gespeicherten Statusdaten hat, wobei das Rechnersystem aufweist:
eine Strom- bzw. Spannungsquelle (20, 21),
eine Speichereinrichtung (4) zum Speichern von Daten,
eine Batterie (5) zum Stützen der Speichereinrichtung, in der Daten gespeichert sind,
wobei das Rechnersystem gekennzeichnet ist durch weiterhin:
eine Steuereinrichtung (11, 12, 2) zum Bestimmen, ob eine Hinweisvorrichtung (1) mit dem Rechnersystem verbunden ist, wenn die Strom- bzw. Spannungsquelle (20, 21) während eines Betriebes des Rechnersystems abgeschaltet ist, und zum Einschreiben der in dem Register (1b) gespeicherten Statusdaten in die Speichereinrichtung (4), wenn eine Hinweisvorrichtung (1) angeschlossen ist.

2. Rechnersystem nach Anspruch 1, dadurch gekennzeichnet, daß die Steuereinrichtung (11, 12) bestimmt, ob eine Hinweisvorrichtung (1) verbunden ist, wenn die Strom- bzw. Spannungsquelle (20, 21) eingeschaltet ist, und Statusdaten, die in der Speichereinrichtung (4) gespeichert sind, in das Register (1b) setzt, falls eine Hinweisvorrichtung (1) angeschlossen ist.

3. Rechnersystem nach Anspruch 2, dadurch gekennzeichnet, daß die Hinweisvorrichtung (1) eine Maus (1) umfaßt.

4. Rechnersystem nach Anspruch 2, dadurch gekennzeichnet, daß das Rechnersystem weiterhin eine Anzeigevorrichtung (14) umfaßt und der Controller (la) die Anzeigevorrichtung (14) veranlaßt, einen Cursor gemäß den im Register (1b) gespeicherten Statusdaten anzuzeigen, und eine Koordinatenposition des angezeigten Cursors erhält.

5. Rechnersystem nach Anspruch 2, dadurch gekennzeichnet, daß das Rechnersystem weiterhin wenigstens eine Komponente umfaßt und die Steuereinrichtung (11, 12) in der Komponenten verwendete Komponentendaten in die Speichereinrichtung (4) schreibt, wenn die Strom- bzw. Spannungsquelle während des Betriebs des Rechnersystems abgeschaltet ist.

6. Rechnersystem nach Anspruch 5, dadurch gekennzeichnet, daß die Steuereinrichtung (11, 12) die in der Speichereinrichtung (4) gespeicherten Komponentendaten in die Komponenten setzt, wenn die Strom- bzw. Spannungsquelle (20, 21) eingeschaltet ist.

7. Verfahren zum Ausführen einer Wiederaufnahmefunktion in einem Rechnersystem, mit dem eine Hinweisvorrichtung (1) verbindbar ist, wobei das Rechnersystem eine Strom- bzw. Spannungsquelle (20, 21) und einen Speicher (4) aufweist, wobei der Speicher (4) durch eine Batterie (5) gestützt ist, die Hinweisvorrichtung (1) ein Register (1b) zum Speichern von Statusdaten und einen Controller (la) zum Steuern eines Betriebes der Hinweisvorrichtung (1) gemäß den gespeicherten Statusdaten hat, wobei das Verfahren die folgenden Schritte umfaßt:
Bestimmen, ob die Strom- bzw. Spannungsquelle (20, 21) während eines Betriebes des Rechnersystems abgeschaltet ist,
Bestimmen, ob eine Hinweisvorrichtung (1) an das Rechnersystem angeschlossen ist, wenn die Strom- bzw. Spannungsquelle (20, 21) abgeschaltet ist,
Einschreiben der in dem Register (1b) gespeicherten Statusdaten in den Speicher (4), falls eine Hinweisvorrichtung (1) angeschlossen ist.

8. Verfahren nach Anspruch 7, dadurch gekennzeichnet, daß das Verfahren weiterhin die folgenden Schritte umfaßt:
Bestimmen, ob eine Hinweisvorrichtung (1) angeschlossen ist, wenn die Strom- bzw. Spannungsquelle (20, 21) eingeschaltet ist, und
Setzen der in dem Speicher (4) gespeicherten Statusdaten in das Register (1b), falls eine Hinweisvorrichtung (1) angeschlossen ist.

9. Verfahren nach Anspruch 8, bei dem das Computersystem weiterhin eine Anzeigevorrichtung (14) aufweist, wobei das Verfahren dadurch gekennzeichnet ist, daß es weiterhin die folgenden Schritte umfaßt:
Anzeigen eines Cursors auf der Anzeigevorrichtung (14), und
Gewinnen eine Koordinatenposition des angezeigten Cursors.

10. Verfahren nach Anspruch 8, bei dem das Computersystem weiterhin wenigstens eine Komponente umfaßt, wobei das Verfahren dadurch gekennzeichnet ist, daß es außerdem den Schritt des Einschreibens von in der Komponenten verwendeten Komponentendaten in den Speicher (4), wenn die Strom- bzw. Spannungsquelle (20, 21) abgeschaltet ist, umfaßt.

11. Verfahren nach Anspruch 10, dadurch gekennzeichnet, daß das Verfahren weiterhin den Schritt des Setzens der in dem Speicher (4) gespeicherten Komponentendaten in eine entsprechende Komponente umfaßt, wenn die Strom- bzw. Spannungsquelle (20, 21) eingeschaltet ist.

## Revendications

1. Système d'ordinateur auquel on peut raccorder un dispositif de pointage (1) ayant un registre (1b) pour stocker des données d'état et un dispositif de commande (la) pour commander le fonctionnement du dispositif de pointage selon les données d'état stockées, le système d'ordinateur comprenant : une source d'alimentation (20, 21) ;
un dispositif de mémoire (4) pour stocker des données ;
une batterie (5) pour secourir le dispositif de mémoire (4) dans lequel des données sont stockées ;
le système d'ordinateur étant caractérisé en ce qu'il comprend en outre :
un dispositif de commande (11, 12, 2) pour déterminer si un dispositif de pointage (1) est raccordé au système d'ordinateur lorsque la source d'alimentation (20, 21) est coupée pendant le fonctionnement du système d'ordinateur et pour écrire les données d'état stockées dans le registre (1b) dans le dispositif de mémoire (4) si un dispositif de pointage (1) est raccordé.

2. Système d'ordinateur selon la revendication 1, caractérisé en ce que le dispositif de commande (11, 12) détermine si un dispositif de pointage (1) est raccordé lorsque la source d'alimentation (20, 21) est mise sur marche et met les données d'état stockées dans le dispositif de mémoire (4) dans le registre (1b) si un dispositif de pointage (1) est raccordé.

3. Système d'ordinateur selon la revendication 2, caractérisé en ce que le dispositif de pointage (1) comprend une souris (1).

4. Système d'ordinateur selon la revendication 2, caractérisé en ce que le système d'ordinateur comprend en outre un dispositif d'affichage (14), et le dispositif de commande (la) provoque l'affichage d'un curseur sur le dispositif d'affichage (14) selon les données d'état stockées dans le registre (1b) et obtient une position de coordonnées du curseur affiché.

5. Système d'ordinateur selon la revendication 2, caractérisé en ce que le système d'ordinateur comprend en outre au moins un composant, et le dispositif de commande (11, 12) écrit des données de composant utilisées dans le composant dans le dispositif de mémoire (4) lorsque la source d'alimentation (20, 21) est coupée pendant le fonctionnement du système d'ordinateur.

6. Système d'ordinateur selon la revendication 5, caractérisé en ce que le dispositif de commande (11, 12) met les données de composant stockées dans le dispositif de mémoire (4) dans le composant lorsque la source d'alimentation (20, 21) est mise sur marche.

7. Procédé pour exécuter la fonction de reprise dans un système d'ordinateur auquel on peut raccorder le dispositif de pointage (1), le système d'ordinateur ayant une source d'alimentation (20, 21) et une mémoire (4), la mémoire (4) étant secourue par une batterie (5), le dispositif de pointage (1) ayant un registre (1b) pour stocker des données d'état et un dispositif de commande (la) pour commander le fonctionnement du dispositif de pointage (1) selon les données d'état stockées, le procédé comprenant les étapes de :
détermination si la source d'alimentation (20, 21) est coupée pendant le fonctionnement du système d'ordinateur ;
détermination si un dispositif de pointage (1) est raccordé au système d'ordinateur lorsque la source d'alimentation (20, 21) est coupée;
écriture des données d'état stockées dans le registre (1b) dans la mémoire (4) si un dispositif de pointage (1) est raccordé.

8. Procédé selon la revendication 7, caractérisé en ce que le procédé comprend en outre les étapes de :
détermination si un dispositif de pointage (1) est raccordé lorsque la source d'alimentation (20, 21) est en marche ; et
introduction des données d'état stockées dans la mémoire (4) dans le registre (1b) si un dispositif de pointage (1) est raccordé.

9. Procédé selon la revendication 8, dans lequel le système d'ordinateur comprend en outre un dispositif d'affichage (14), le procédé étant caractérisé en ce qu'il comprend en outre les étapes de :
affichage d'un curseur sur le dispositif d'affichage (14) ; et
obtention d'une position de coordonnées du curseur affiché.

10. Procédé selon la revendication 8, dans lequel le système d'ordinateur comprend en outre au moins un composant, le procédé étant caractérisé en ce qu'il comprend en outre l'étape d'écriture des données de composant utilisées dans le composant dans la mémoire (4) lorsque la source d'alimentation (20, 21) est coupée.

11. Procédé selon la revendication 10, caractérisé en ce que le procédé comprend en outre l'étape d'introduction des données des composants stockées dans la mémoire (4) dans un composant correspondant lorsque la source d'alimentation (20, 21) est mise en marche.
